# EUROPEAN PATENT SPECIFICATION

(11) **EP 3 944 755 B1**
(45) Date of publication and mention of the grant of the patent: **29.11.2023**
(21) Application number: 21187976.2
(22) Date of filing: 27.07.2021
(51) Int. Cl.: A01G 9/24, A01G 31/02

(54) **SYSTEM FOR THE AUTOMATIC PREPARATION AND OPERATIONAL TREATMENT OF A WATERING SOLUTION IN PLANT CULTIVATION**
SYSTEM ZUR AUTOMATISCHEN HERSTELLUNG UND OPERATIONELLEN BEHANDLUNG EINER BEWÄSSERUNGSLÖSUNG IN DER PFLANZENZUCHT
SYSTÈME DE PRÉPARATION AUTOMATIQUE ET DE TRAITEMENT OPÉRATIONNEL D'UNE SOLUTION D'ARROSAGE DANS LA CULTURE DE PLANTES

(30) Priority: 28.07.2020 CZ 20200430
(43) Date of publication of application: 02.02.2022
(73) Proprietor: Numazon s.r.o., 613 00 Brno, Cerna Pole (CZ)
(72) Inventor: Artner, Martin, 561 69 Kraliky (CZ); Venzara, Bartolomej, 561 69 Kraliky (CZ)
(74) Representative: Musil, Dobroslav

(56) References cited:
- DE-A1- 3 331 818
- GB-A- 2 542 049
- US-A1- 2019 075 741

## Description

### Technical field

The present invention relates to the field of automation of the growing process in hydroponic, aquaponic and conventional soil-based cultivation. In particular, the invention provides an automatic system for the preparation and operational treatment of a watering solution which can be connected to various types of plant cultivation systems.

The invention also relates to a method of the automatic preparation and operational treatment of a watering solution in plant cultivation.

In addition, the invention relates to a plant cultivation device with a system for the automatic preparation and operational treatment of a watering solution in plant cultivation.

### Background art

Hydroponic plant cultivation, i.e., growing plants without soil, where nutrition is provided by a nutrient solution (fertilizer), has become widespread worldwide due to more efficient use of water, fertilisers, climate control and pathogen prevention and is considered a suitable method of the production of vegetables and other crops. The importance of hydroponics in vegetable production is also growing in the Czech Republic, especially in tomato cultivation. In order to maximize the yield and nutritional values of the vegetables grown, it is important that the growing conditions correspond to plant metabolism, in addition to plant metabolism in each stage of plant development.

In order to maximise the yield and nutritional value of the vegetables grown, it is important that growing conditions correspond to the plant metabolism, and at every stage of the plant development. Maintaining the growing conditions at mutual optimal values corresponding to the respective development stage of the plant with the smallest possible fluctuations, or sufficiently fast adaptation of the growing conditions for the current development stage of the plant is therefore the essence of maximizing the yield and nutritional values of the grown plants and their fruits.

To optimize and effectively control the growing process in terms of maintaining suitable growing conditions, devices are known which are capable of measuring and monitoring a limited number of parameters of the growing conditions and regulating plant nutrition in order to maximize yield and nutritional values of the grown plants and their fruits.

Most known devices aim at the automated triggering of pre-prepared watering, based on monitoring and detection of such parameters as solar radiation intensity, condition and operation of drainage sensors, and, if appropriate, on simple set time intervals. To control the actual quality of the nutrient solution, pH probes, electrical conductivity or temperature sensors, etc. are used. A typical example of such a solution is described in US 2009/0223128.

US 2014/0324490 A1 discloses a system using easily monitorable parameters, such as temperature and light exposure, but from the point of view of the nutritional quality of the grown plants, only the output product is evaluated, e.g., in the form of evaluation of nutritional content in plants.

A certain degree of optimization of plant nutrient management is disclosed, for example, in US 9 247 688 B1, which describes a nutrient blend optimization system.

WO 2017/040485 A1 discloses a solution which optimizes the appropriate setting of the individual nutrients in a hydroponic solution. However, it remains at the level of setting the input parameters of the solution depending on the specific cultivated crop, without online monitoring and control or feedback.

US 2019/0075741 A1 describes an automated system of hydroponic growth and focuses on a comprehensive system for growing plants, including the logistical arrangement (tanks, sections). In terms of controlling the growing process, it does provide feedback, but it uses this only for common parameters such as pH, nutrient concentrations in summarized form, EC, temperature, CO₂.

CZ/EP 2760277, as well as numerous other documents, describes its own cultivation technology in the field of hydroponics, wherein it defines the possibilities of using artificial substrates, fixing and positioning plants or water and nutrients supply. Similarly, for example, WO 2016/028329 A1 describes the overall arrangement of a plant cultivation system regardless of the control of the chemical composition of the nutrient solution. Another system is known from DE 33 31 818 A1.

A common disadvantage of the background art is the absence of the online monitoring of other important nutrient parameters of the nutrient solution besides pH, electrical conductivity (EC) and temperature, as well as the absence of automatic control of the nutrient solution preparation according to the current needs of the cultivated plants.

The objective of the invention is therefore to eliminate or at least minimize the disadvantages of the background art, in particular, to create a system working with automatic preparation and operational treatment of a watering solution during plant cultivation in the growing space, capable of automatic operation during the entire vegetation cycle of plants (crops) and capable of choosing a more economical variant of adjusting indoor environment parameters according to the data from sensor units for indoor and outdoor atmosphere.

### Principle of the invention

The objective of the invention is achieved by a system for automatic preparation and operational treatment of a watering solution in plant cultivation, whose principle consists in that an outlet pipe of nutrient solution (fertilizer) from a tank is connected to an inlet of a proportional three-way valve, whose first outlet is connected to an inlet of at least one dosing tube of nutrient solution components and whose second outlet is adapted to connect to a nutrient solution supply to a plant cultivation system and the proportional three-way valve is connected to a control unit, whereby an outlet of the dosing tube is connected to the tank of nutrient solution and an outlet of at least one dosing peristaltic pump is connected into the dosing tube, an inlet of the dosing peristaltic pump being connected to a reservoir of an added component of nutrient solution, wherein the dosing peristaltic pump is connected to the control unit to which are further connected at least one sensor of the characteristics of the nutrient solution in the tank and at least one level sensor of the nutrient solution in the tank and these sensors are connected to the control unit.

The principle of a the- method of the automatic preparation and operational treatment of a watering solution in plant cultivation making use of a system according to any of the claims 1 to 9, in which inlet water is mixed with a specified amount of individual added substances, the method further comprises the characteristics and parameters of the nutrient solution are monitored and compared by the control unit with the required characteristics and parameters of the nutrient solution in the tank and to adjust the characteristics and parameters of the nutrient solution in the tank, the nutrient solution is pumped from the tank to the dosing tube, in which a determined amount of the required component of the nutrient solution determined by the control unit is added to the nutrient solution, subsequently the nutrient solution from the dosing tube together with the added necessary components is fed back into the nutrient solution tank and the new characteristics and parameters of the nutrient solution in the tank are checked, whereupon, if the desired characteristics and parameters of the nutrient solution in the tank are achieved, a decision is made to start feeding the nutrient solution into the plant cultivation system. On the other hand, if the desired characteristics and parameters of the nutrient solution in the tank are not achieved, a decision is made to repeat the addition of the necessary components of the nutrient solution while repeating the passage of the nutrient solution through the dosing tube, possibly in combination with the admission of clean inlet water through the inflow pipe.

The principle of a the- plant cultivation device for hydroponic, aquaponic and conventional cultivation of plants in the soil consists in the fact that it comprises at least one system for the preparation and operational treatment of a watering solution according to any of claims 1 to 9.

The main advantage of the proportional control of the flow between the plant cultivation system and the system for the automatic preparation and operational treatment of a watering solution during plant cultivation is the ability to continuously adjust the parameters of nutrient solution (fertigation), without loss of supply of nutrient solution to cultivated plants in various types of plant cultivation systems, such as hydroponic systems, aquaponic systems or also soil-based systems. Continuous adjustment of parameters and characteristics of nutrient solution enables to observe a deviation of pH values in the range of 0.025 points and a deviation of electrical conductivity values of 0.025 mS/cm even when working in a recirculation plant cultivation system with variable values of the nutrient solution returning from the plant cultivation. Another major advantage of the invention is that the continuous adjustment to the parameters and characteristics of the nutrient solution allows a smaller tank to be used for the nutrient solution without prolonged retention of the nutrient solution, when in the nutrient solution there is no precipitation of nutrients or degradation of organic components by a delay between the preparation and distribution of the nutrient solution to the cultivated plants.

### Description of the drawings

Variants of a system for the preparation and operational treatment of a watering solution are schematically represented in the drawings, wherein Fig. 1 shows a first example of embodiment of the system for the automatic preparation and operational treatment of a watering solution during plant cultivation in a plant cultivation system and in a growing space, Fig. 2 shows a second example of embodiment of the system for the automatic preparation and operational treatment of a watering solution during plant cultivation in the plant cultivation system and in the growing space, Fig. 3 shows a third example of embodiment of the system for the automatic preparation and operational treatment of a watering solution during plant cultivation in the plant cultivation system and in the growing space, Fig. 4 shows an exemplary embodiment of a system with an extended number of reservoirs of added components of nutrient solution, Fig. 5 shows a block diagram of a plant cultivation device arranged in the growing space with a plant cultivation system connected to the system for the automatic preparation and operational treatment of a watering solution during plant cultivation and Fig. 6 shows an embodiment of the system for automatic preparation and operational treatment of a watering solution during plant cultivation in a plurality of plant cultivation systems in the growing space.

### Examples of embodiment

Exemplary embodiments of a plant cultivation device will be described which is arranged in a growing space with a plant cultivation system connected to a system for the automatic preparation and operational treatment of a watering solution during plant cultivation. A method will be further described with reference to an example of the method of the automatic preparation and operational treatment of a watering solution during plant cultivation and a device using said system for the automatic preparation and operational treatment of a watering solution during plant cultivation.

For the purposes of this invention, the following terms used shall have the following meanings (terminology):
The term "plant cultivation device" means a system of functional nodes, units and elements, including software, which are arranged in a growing space, where the plant cultivation device is used to implement plant cultivation, such as plant cultivation system, growing actuators, system for the automatic preparation and operational treatment of a watering solution during plant cultivation, etc.

The term "growing space" means a space in which the plant cultivation device is arranged. The growing space is typically a greenhouse, foil plant, indoor growing room, etc.

"A plant cultivation system" is a system of elements in which the cultivated plants grow (hydroponic, aquaponic, soil-based, etc.), including a system for distributing the watering solution in the plant cultivation system to the individual plants, wherein the watering solution is supplied from a system for the automatic preparation and operational treatment of the watering solution.

"Growing actuators" are nodes, units and devices used to control the environment in the growing space, such as the ventilation, heating, misting devices, air conditioning, pumps, sensors of temperature, humidity, etc.

The term "system for the automatic preparation and operational treatment of a watering solution during plant cultivation" denotes a system of functional units and elements, including a control unit and software, intended for the automatic preparation and operational treatment of a watering solution during plant cultivation in the plant cultivation system.

"The system for the automatic preparation and operational treatment of a watering solution during plant cultivation" comprises "a device for the automatic preparation and operational treatment of a watering solution during plant cultivation" and a control unit with software for this device.

The term "control unit" is a set of hardware and software for controlling the functional nodes, units and elements to control and optimize the growing conditions within the growing space.

The term "watering solution" means a nutrient solution for the fertigation of cultivated plants, which contains water with the addition of nutrients (organic and mineral), substances for pH adjustment and possibly with the addition of phytohormonal supplements, admitted water, sanitizing means and solutions, etc.

"A mixing device" is a device in which the preparation and operational adjustment to the characteristics of the watering solution is immediately carried out. The mixing device is part of the system for the automatic preparation and operational treatment of the watering solution.

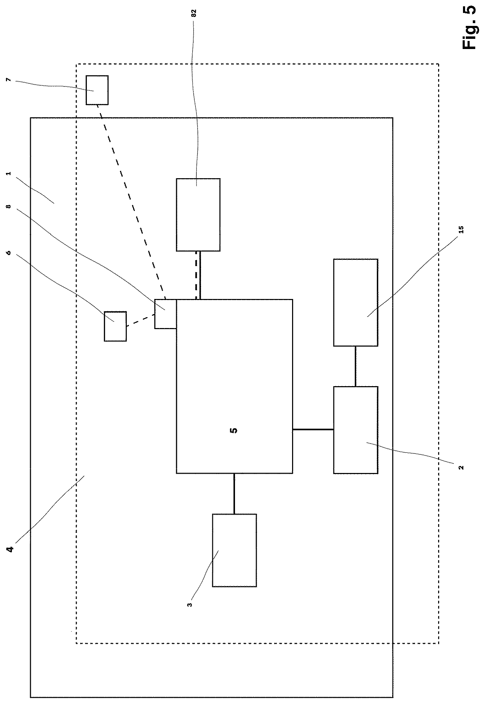

As shown in Fig. 5, a plant cultivation device **4** is arranged in a growing space **1,** which comprises a system of functional nodes, units and elements, including software, for implementing cultivation of plants. The plant cultivation device **4** comprises a plant cultivation system **15,** a device **2** for the automatic preparation and operational treatment of a watering solution during plant cultivation, a system of growing actuators **3** and a control unit **5.**

The individual growing actuators **3** are adapted to control the environment in the growing space **1**, such as air exchange control, temperature control, humidity control, etc. The growing actuators **3** include action nodes and members to perform tasks immediately. The actuators **3** are, for example, the ventilation, heating, humidifiers, air conditioning, pumps, sensors of temperature and humidity, etc. The individual elements of the plant cultivation device **4** are connected to the control unit **5,** which is adapted to control the individual nodes, groups, elements, etc. of the plant cultivation device **4.** In addition, the control unit **5** is adapted to control two-way communication with the user's device of the plant cultivation device **4,** especially the control unit **5** is adapted for wireless or wired communication with the communication device of the user of the plant cultivation device **4.**

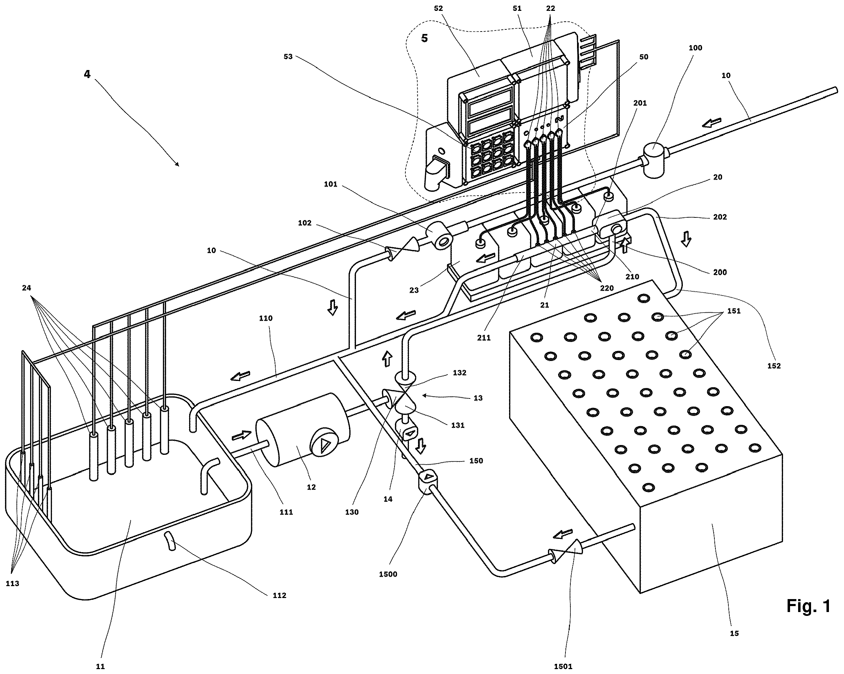

In an embodiment of Fig. 1, an inlet water supply pipeline **10** is arranged in the plant cultivation device **4** in which a filter **100,** a flow meter **101** and a valve **102** are connected one after the other in series in the direction of the inlet water flow to control the inlet water flow to the entire plant cultivation device **4.** In an unillustrated exemplary embodiment, a valve **102** is arranged first downstream of the filter **100** in the supply pipeline **10,** and the flow meter **101** is arranged downstream of it. The valve **102** is preferably formed by an electromagnetically actuated valve connected to the control unit **5.** A filter **100** is in principle an optional part, and so the supply pipeline **10** in the unillustrated exemplary embodiment is without a filter **100.** The filter **100** consists of, for example, a filter of solid particles, a filter for changing the chemical composition of water, a filter for UV sterilization of water, etc.

In the direction of inlet water flow through the supply pipeline **10,** the supply pipeline **10** is connected to the intake opening **110** of the tank **11** of the nutrient solution downstream of the assembly of the filter **100,** flow meter **101** and valve **102.**

The tank **11** of the nutrient solution is provided with a safety overflow **112** of the nutrient solution for protection against overflow of the tank **11**, and further, the tank **11** is provided with a level sensor **113** of the nutrient solution in the tank **11**, which is connected to the control unit **5.**

The tank **11** of the nutrient solution is provided with an outlet pipe **111** of the nutrient solution, which is connected to the inlet **130** of a first three-way valve **13** via a pump **12** of the nutrient solution, preferably a circulating pump. The pump **12** of the nutrient solution is connected to the control unit **5.**

A first outlet **131** of the first three-way valve **13** is connected through a first clack valve **14** to a discharge opening of the nutrient solution.

A second outlet **132** of the first three-way valve **13** is connected to an inlet **200** of a proportional three-way valve **20** of the device **2** for the automatic preparation and operational treatment of a watering solution during plant cultivation.

The first three-way valve **13** is connected to the control unit **5.**

In the illustrated embodiment, the proportional three-way valve is formed by a controlled valve with a servo-actuator, the proportional three-way valve **20** being connected to the control unit **5.**

A first outlet **201** of the proportional three-way valve **20** is connected to an inlet **210** of a dosing tube **21** of components of the nutrient solution, wherein an outlet **211** of the dosing tube **21** is connected to the tank **11** of the nutrient solution. In the dosing tube **21,** the addition of the necessary components and additives to the watering solution is carried out immediately, as will be described in more detail below. In the embodiment shown, the outlet **211** of the dosing tube **21** is connected by means of a connecting pipe **212** to an intake opening **110** of the tank **11** of the nutrient solution.

A second outlet **202** of the proportional three-way valve **20** is connected to a nutrient solution supply **152** to the plant cultivation system **15.** The plant cultivation system **15** is provided with an unillustrated watering solution distribution, which, after leaving the plant cultivation system **15,** is further connected to the tank **11** of the nutrient solution by a return pipe **150** of the nutrient solution. In the exemplary embodiment shown, the return pipe **150** of the nutrient solution is connected to the intake opening **110** of the tank **11** of the nutrient solution. A second check valve **1500** and a valve **1501** are preferably connected into the return line **150** for protection against possible backflow of the nutrient solution and for service disconnection of the plant cultivation system **15.** The valve **1501** is preferably connected to the control unit **5.** In an unillustrated embodiment, at least a filter of solid particles is connected into the return pipe which in recirculation plant cultivation systems prevents the introduction of mechanical impurities from the plant cultivation system **15** into the tank **11** of the nutrient solution and subsequently into the entire nutrient solution circuit in the entire plant cultivation device **4.**

Outlets **220** of dosing peristaltic pumps **22** are connected to the inner space of the dosing tube **21,** the inlets of the dosing peristaltic pumps **22** being connected to reservoirs **23** of added components of the nutrient solution. The outlets **220** of the dosing peristaltic pumps, **22** are ideally connected to the dosing tube **21** one after the other in series in the direction of the length of the dosing tube **21.** The dosing peristaltic pumps **22** are connected to the control unit **5.** In the exemplary embodiment shown, the dosing peristaltic pumps **22** are arranged in the pump part **50** of the control unit **5.**

In an unillustrated exemplary embodiment, the reservoirs **23** of added components of the nutrient solution are provided with sensors for the amount of added components of the nutrient solution in each reservoir **23,** e.g., they are provided with sensors of the level of added components of the nutrient solution in the reservoir **23,** which is advantageous especially to improve the functionality of the system, to protect against unexpected consumption of the entire contents of the reservoir **23,** etc. The sensors for the amount of added nutrient components in each reservoir **23** are connected to the control unit **5.**

In the exemplary embodiment of Figs. 1 to 3, the device **2** for the automatic preparation and operational treatment of a watering solution during plant cultivation is provided with the dosing tube **21,** into which are connected successively the outlets **220** of five dosing peristaltic pumps **22** in the direction of the length of the dosing tube **21.** Each of the dosing peristaltic pumps **22** is connected to one reservoir **23** of added components of the nutrient solution, i.e., up to 5 components are added to the nutrient solution in a targeted and controlled manner, whereby the number and volume of the components actually added is determined by the control unit and dosing is performed within the corresponding operating time of the relevant calibrated peristaltic pump **22.** At the same time, this dosed volume is software subtracted from the remaining amount of the respective added component in the respective reservoir **23,** thus eliminating the need for a measuring device of the level of the reservoir **23** filling.

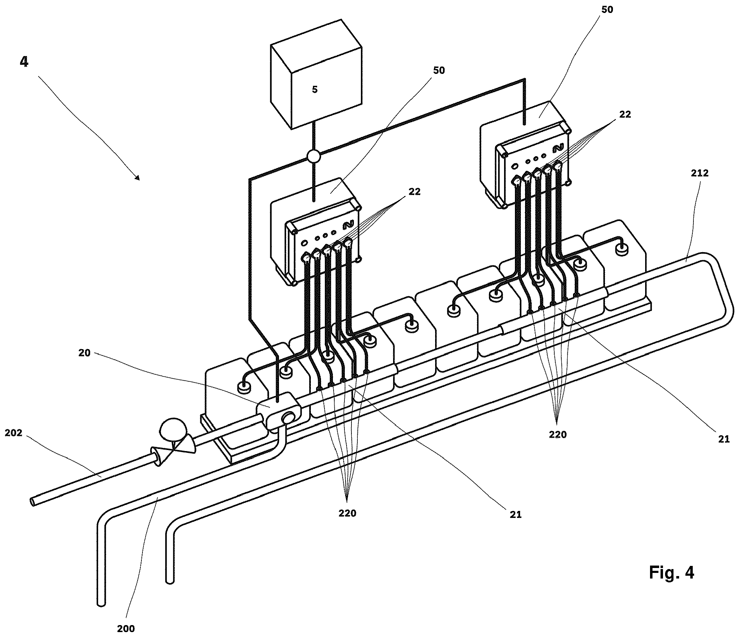

In the exemplary embodiment of Fig. 4, the device **2** for the automatic preparation and operational treatment of a watering solution during plant cultivation is provided with a pair of dosing tubes **21** connected one after the other in series, the outlets **220** of the five dosing peristaltic pumps **22** are successively connected into each dosing tube **21** in the direction of the length of the dosing tube **21,** so that the outlets **220** of ten peristaltic dosing pumps **22,** each of which is connected to one reservoir **23** of added components of the nutrient solution, are successively connected into the pair of dosing tubes **21** illustrated herein. In the embodiment of Fig. 4, ten components are added to the nutrient solution in a targeted and controlled manner.

In an unillustrated exemplary embodiment, the outlets **220** of all dosing peristaltic pumps **22** are connected into a single dosing tube **21,** not only the five shown, or another suitable number of dosing tubes **21** is used into which the outlets **220** of all necessary peristaltic dosing pumps **22** are connected. In another unillustrated exemplary embodiment, the number of the outlets **220** of the dosing peristaltic pumps **22** connected into each dosing tube is different, e.g., 2, 3, 4, 6, etc., which makes this system of adding components of the nutrient solution a modular system capable of easily adapting to virtually any number of substances added to the nutrient solution.

The dosing peristaltic pumps **22** allow very fine control of the dosed volume of added substances and have easy maintenance even when dosing aggressive substances. In addition, they allow easy visual inspection of the technical condition.

The tank **11** of the nutrient solution is provided with a set of sensors **24** of the nutrient solution characteristics, or parameters of the nutrient solution in the tank **11.** The sensors **24** of the nutrient solution characteristics are connected to the control unit **5.**

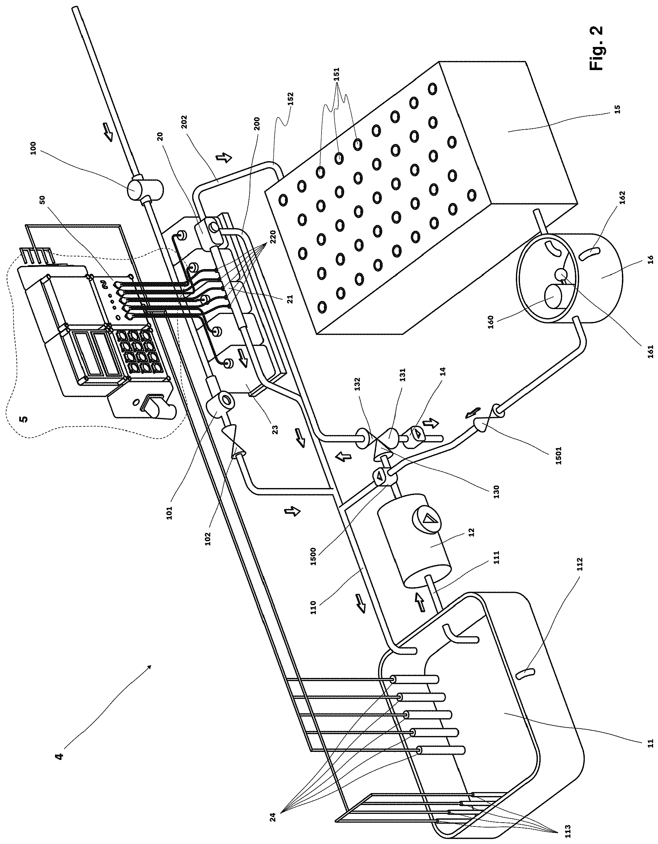

Fig. 2 shows a modified plant cultivation device **4,** which is at the outlet of the nutrient solution from the plant cultivation system **15** provided with a pumping tank **16,** which is provided with a pumping pump **160** having a float switch **161,** preferably a vertical float switch. Furthermore, the pumping tank **16** is provided with a nutrient solution safety overflow **162.** The pumping pump **160** and the float switch **161** are connected to the control unit **5.**

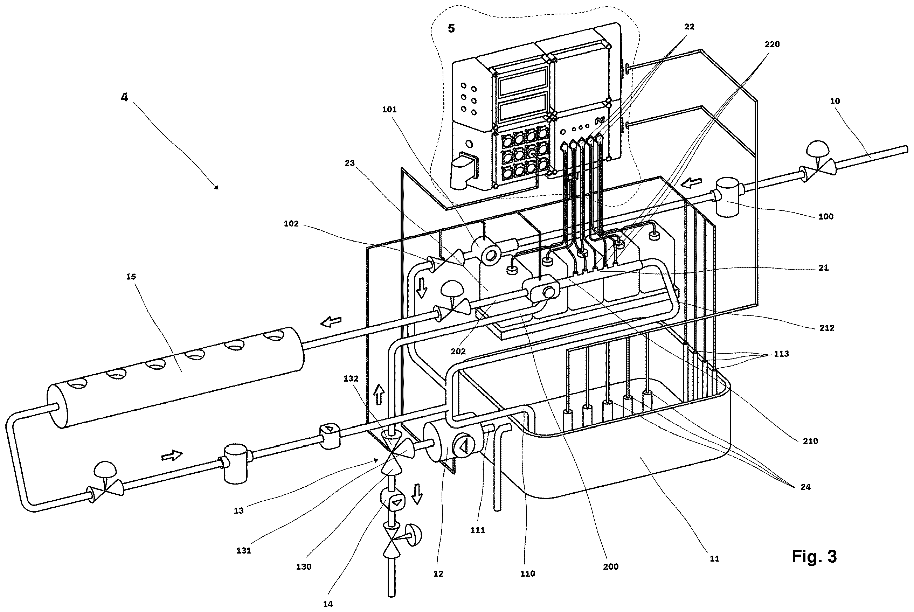

Fig. 3 shows a modified pipeline cultivation device **4** with a tube plant cultivation system **15.**

In an unillustrated exemplary embodiment, the plant cultivation device **4** of Figs. 1 to 3 is further modified to include a system of parallel and/or series connected plant cultivation systems **15.**

The control unit **5** is either common to all nodes, units, elements, etc., of the plant cultivation device, or it is suitably divided into individual control sub-units which are possibly arranged in individual parts **50** to **53** of the housing of the control unit **5.**

The plant cultivation device **4** with the plant cultivation system **15,** the device **2** for the automatic preparation and operational treatment of a watering solution during plant cultivation, the control unit **5** and the growing actuators **3** according to Figs. 1 to 5 operates in such a manner that the inlet water is fed through the supply pipeline **10** into the tank 11 of the nutrient solution through the filter **100,** the flow meter **101** and the electromagnetically operated valve **102.**The tank **11** of the nutrient solution is provided with level sensors **113** of the nutrient solution in the tank **11** and on the basis of the data from the flow meter **101** and the level sensors **113** of the nutrient solution in the tank **11,** the control unit **5** controls the filling of the tank **11** with the inlet water.

The sensors **24** of the nutrient solution characteristics, which are arranged in the tank **11** of the nutrient solution, measures at adjustable time intervals, typically lasting 1 or more seconds, the parameters of the nutrient solution in the tank **11**, which are at least the temperature of the watering solution (RTD, [° C], also serves as a reference temperature for thermal compensation of other measurements), pH [-], EC [mS/cm] (electrical conductivity), DO [mg/I] (dissolved oxygen content) and ORP [mV] (oxidation reduction potential). Furthermore, the sensors **24** of the nutrient solution characteristics can measure any set of nutrient parameters of the watering solution by combining ion selective electrodes (ISE), etc.

The nutrient solution is transported by the circulating pump **12** from the tank **11** through the first three-way valve **13** either to the discharge opening through the clack valve **14** or to the proportional three-way valve **20.** The location of the discharge opening just downstream of the pump **12** and downstream of the first three-way valve **13** allows easy and automated sanitation of the tank **11** of the nutrient solution, including final washing of the plant cultivation system **15** with clean water before harvesting the cultivated plants **151,** the so-called "flushing". This connection of the discharge opening downstream of the first three-way valve **13** also makes it possible to drain the tank **11** of the nutrient solution in the event of an emergency without the nutrient solution interfering with the plant cultivation system **15.**

If the nutrient solution is fed by the circulating pump **12** through the second outlet **132** of the first three-way valve **13** to the proportional three-way valve **20** and if the quality and the parameters of the nutrient solution in the tank **11,** detected and measured by the sensors **24** of the nutrient solution characteristics in the tank **11** correspond to the required values, the nutrient solution is fed through the second outlet **202** of the proportional three-way valve **20** to the plant cultivation system **15,** or into a system of parallel or series-connected plant cultivation systems **15**, i.e., to the cultivated plants. In doing so, the power and type of the pump **12**, the diameter of the pipes **10, 110, 111,** etc., the diameter and length and number of the dosing tubes **21,** the size of the tank **11,** etc., and other components, nodes and elements of the plant cultivation device **4,** etc., are determined and scaled according to the number and size of the connected plant cultivation systems **15.** From the plant cultivation system, **15** the nutrient solution in the illustrated embodiment of the circulating plant cultivation device **4** is returned to the tank **11** through the return pipe **150,** optionally via the pumping tank **16.** In an unillustrated embodiment of the plant cultivation device **4** with a single use of a nutrient solution, the nutrient solution is discharged from the plant cultivation system **15** to a waste tank for further processing or for use outside the plant cultivation device **4.**

If the quality and parameters of the nutrient solution in the tank **11**, detected and measured by the sensors **24** of the nutrient solution characteristics in the tank **11**, deviate from the required values, the nutrient solution is fed through the first outlet **201** of the proportional three-way valve **20** to the inlet **210** of the dosing tube **21,** in which the necessary components of the nutrient solution are added to the nutrient solution by means the dosing peristaltic pumps **22** from the reservoirs **23** according to the instructions of the control unit **5.** Thanks to the software algorithms of the control unit **5,** only mutually unresponsive input substances are always fed to the dosing tube **21** at the same time, in order to avoid undesired interactions of the added components, wherein the peristaltic dosing pumps **22** ensure the delivery of a precisely specified amount of individual input substances to the dosing tube **21** from which these substances are washed out by the nutrient solution supplied from the tank **11** of the nutrient solution by means of the circulating pump **1**. Optionally, at the complete start of the operation of the plant cultivation device **4** or with a completely new (fresh) nutrient solution, the added substances from the dosing tube **21** are first washed out with clean inlet water admitted into the tank **11** through the supply pipeline **10,** whereby the concentration of the individual desired components in the nutrient solution gradually increases due to the circulation through the dosing tube **21**. The nutrient solution is completely mixed with the added components only outside the dosing tube **21,** e.g., only in the tank **11** of the nutrient solution.

The nutrient solution is fed from the outlet **211** of the dosing tube **21** through the connecting pipe **212** back to the tank **11** of the nutrient solution, where the final phase of nutrient solution mixing takes place and where the sensors **24** of the nutrient solution characteristics measure the quality and parameters of the nutrient solution. The measurement of the current parameters of the nutrient solution is carried out in the tank **11** for the preparation of the watering solution at the request of the control unit **5** so that the measurement is not distorted due to the unmixed additives or due to the flow of the nutrient solution. According to the number of the dosing peristaltic pumps **22** and the number of added substances, the added substances can be dosed down to the level of individual elements and/or ionic groups. With this circulating principle of the nutrient solution circulation, the nutrient solution in the tank **11** of the required quality and parameters is gradually prepared, including the preparation of the initial dose of the nutrient solution from clean inlet water, including continuous adjustment to the parameters of the nutrient solution during plant cultivation, e.g., according to the current development phase of the cultivated plants, including water admission, addition of substances to the nutrient solution, etc. Thanks to the implemented interconnection, all operations, such as preparation of the nutrient solution, mixing of the added substances, distribution of the nutrient solution into the plant cultivation system **15,** discharge of water and nutrient solution, etc., are implemented fully automatically and by means of one pump **12.**

Thus, the control unit **5** is adapted to prepare and maintain optimal nutrient solution in the tank **11** of the nutrient solution for the selected cultivated crop (plant). However, it is not possible to maintain at the same time optimal nutrient solution with different parameters for more plant species in one tank **11** of the nutrient solution.

The system for the automatic preparation and operational treatment of a nutrient solution, i.e., the system consisting of a device **2** for the automatic preparation and operational treatment of the nutrient solution and the control unit **5** with software, is due to its universal design connectable to any type of plant cultivation system **15,** any type of tank **11** of the nutrient solution, etc., Moreover, it is capable of operating all types of recirculation and drain-to-waste plant cultivation systems **15.**

In the exemplary embodiment of Fig. 5, the control unit **5** is connected to a sensor unit **6** of the characteristics of the internal environment in the growing space **1,** which is adapted to monitor and evaluate the level of sunlight exposure [lux, PAR], temperature [°C], humidity [%RH], CO₂[ppm], etc., and to a sensor unit **7** of the characteristics of the external environment of the growing space **1,** such as the level of sunlight exposure [lux, PAR], temperature [°C], humidity [%RH]), etc. Furthermore, the control unit **5** is provided with consumption sensors and sensors of electricity consumption characteristics of at least some of the nodes, groups, elements, etc., of the plant cultivation device **4,** wherein the control unit **5** is provided with means to detect operating and fault condition of these nodes, groups, elements, etc., or, if necessary, to disconnect the relevant node, group, element from power supply. The control unit **5** works with the measured data from the sensor unit **6, 7** of the characteristics of the internal and external environment of the growing space **1** according to the setting and according to the current growing situation, as well as according to the currently connected nodes, groups and elements, etc., and if appropriate, it also controls additional peripheral devices, such as ventilation, split air conditioning, SensiCom, etc. The logic of the operation of the control unit **5** is adapted to the actually connected power appliances selected in the control application and in assessing the economics of the variant of adjusting the parameters of the operation of the plant cultivation device **4** in the growing space **1.** For example, if lower humidity is required and at the same time CO₂ is not saturated and the external parameters are satisfactory, drier air is sucked in from the outside environment by means of ventilation instead of switching on a dehumidifier. In the case of growing plants indoors, it is also possible to choose to work with the so-called divided atmosphere. On the basis of the measured data from the sensor unit **6, 7** of the characteristics of the internal and external environment, e.g., CO₂ admittance is performed by the respective growing actuators **3**, as well as temperature and humidity regulation, shading of the growing space **1,** etc.

In an unillustrated exemplary embodiment, other power appliances are connected to the control unit **5** using standard communication buses (MODBUS, I2C, UART, etc.).

The control unit **5** is further provided with unillustrated memory means for storing data about the operation of the plant cultivation device **4** and about the conditions in the plant cultivation system **1** in real time, e.g., in the form of a database which can be clearly displayed at any time point, ideally with no limitation of the total record time. The setting of the parameters for operation and the data display is preferably realized through a web application after connecting the user's communication device of the plant cultivation device, e.g., computer, tablet, mobile phone, etc., when it does not depend on the used OS of this user's device. The control unit **5** is further provided with a communication device **8** with at least one communication interface **82** for communication through a local or public (wired) network and/or through a wireless network, such as Wi-Fi, Bluetooth, etc.

The control unit 5 is provided with software with a user interface in which defined growing profiles with statistical output for the UI are cascaded. These cascaded growing profiles are consecutive and ideally have a temporal resolution of 1 day, allowing to set the parameters of light exposure, of atmosphere and of the nutrient solution gradually variable according to the time course of the development cycle of the cultivated plant. The individual growing profiles can be set (edited) for each development stage of the cultivated plant. Also, the individual growing profiles can be imported/exported to/from the control software. In addition, the control unit **5** has a so-called SW persistence layer which ensures that, for example, during the update, the operation of the control unit **5** is not disturbed and the states of the control unit **5** are not lost.

Examples of the operation of the control unit **5** according to the control software, i.e., examples of program steps (blocks), are as follows:

### Example I

The so-called "continuous mode" is deactivated in a plant cultivation system **4** without drain-to-waste circulation of the watering solution. Since the distribution of the watering solution to the plants in the plant cultivation system **15** takes place in time intervals, the parameters and characteristics of the watering solution in the tank **11** can be adjusted at times other than when the distribution of the watering to the plants in the plant cultivation system **15** takes place. The proportional three-way valve **20** is always set to the extreme position, i.e., one of the outlets **201, 202** is fully open and the other of the outlets **201, 202** is fully closed.

In the plant cultivation device **4** with continuous distribution of the watering solution (N.F.T., RDWC, LPA...) to the plants in the plant cultivation system **15,** the treatment and mixing of the watering solution takes place simultaneously with the distribution of the watering solution to the plants in the plant cultivation system **15.** In doing so, the pumps are kept running throughout the mixing process and the proportional three-way valve **20** is set for both outlets **201, 202** proportionally according to the pipe diameter and pipe pressure. The treatment of the nutrient solution (watering solution) is performed in a smaller dose which is mixed with the rest of the solution. The measurement of the parameters and the characteristics of the nutrient solution (watering solution) is carried out in the flowing liquid, with the relevant probes and sensors of the nutrient solution (watering solution) being calibrated for measurement in the flowing liquid.

### Example II

During the initial process of admitting inlet water, which is performed either manually or it is performed as an automatic continuous process, the flow meter is read. The data from the flow meter are used by the control unit **5** to calculate the dosage of individual substances to be added to adjust the watering solution parameters in the dosing tube **21** by means of the dosing peristaltic pumps **22** from the reservoirs **23.**

### Example III - User controlled mixing of the nutrient solution:

In the control application, the user enters for each the dosing peristaltic pumps **22** the volume of the respective added substance he wants to dose. The device according to the invention starts to behave in the following manner in individual steps:
- switching off the circulating pump **12;**
- setting the proportional three-way valve **20** to the "MIXING" position in which the watering solution from the tank **11** is fed through the valve **20** to the dosing tube **21;**
- switching on the circulating pump **12;**
- waiting before starting the respective peristaltic pumps **22;**
- dosing the required amount of the respective added substance to the dosing tube **21,** through which liquid driven by the circulating pump **12** flows;
- mixing the formed solution in the tank **11** by the continued operation of the circulating pump **12** for a set period of time "Duration of mixing [s]";
- switching off the circulating pump **12;**
- waiting for the formed solution to stabilize in the tank **11** for the set period of time "Waiting time before measurement [s]";
- measurement of the parameters and characteristics of the formed nutrient solution in the tank **11;**
- display of the resulting values of the parameters and characteristics of the nutrient solution in the user's application;
- asking the operator if the mixing is finished and whether to switch to the "cultivation" operating mode; (if YES -> the proportional three-way valve **20** is reset to the second outlet **202** to the nutrient solution supply **152** to the plant cultivation system **15** and the control unit **5** controls the circulating pump **12** according to the "cultivation" mode setting (e.g., continuous operation, timer operation); if NOT -> the proportional three-way valve **20** remains set in the "MIXING" position for feeding the watering solution through the valve **20** to the dosing tube **21**).

### Example IV - User controlled inlet water admitting:

The user enters in the control application how many litres of inlet water he wants to admit to the tank **11**. The device according to the invention starts to operate as follows in the individual steps:
- switching off the circulating pump **12**;
- setting the proportional three-way valve **20** to the "MIXING" position, in which the watering solution from the tank **11** is fed through the valve **20** to the dosing tube **21;**
- switching the valve **102** to the "open" position;
- admitting the required amount of water through the filter **100** and the flow meter **101;**
- switching the valve **102** to the "closed" position;
- switching the circulating pump **12;**
- mixing the formed solution in the tank **11** by the continued operation of the circulating pump **12** for the set period of time "Duration of mixing [s]";
- switching off the circulating pump **12;**
- waiting for the formed solution to stabilize in the tank **11** for the set period of time "Waiting time before measurement [s]";
- measurement of the parameters and characteristics of the formed nutrient solution in the tank **11;**
- display of the resulting values of the parameters and characteristics of the nutrient solution in the user's application;
- asking the operator if the mixing is finished and whether to switch to the "cultivation" operating mode (if YES -> the proportional three-way valve **20** is reset to the second outlet **202** to the nutrient solution supply **152** to the plant cultivation system **15** and the control unit **5** controls the circulating pump **12** according to the "growing" mode setting (e.g., continuous operation, timer operation); if NOT -> the proportional three-way valve **20** remains set the "MIXING" position for feeding the watering solution through the valve **20** to the dosing tube **21**).

### Example V - Initial mixing:

The user admits the required amount of clean inlet water either manually using the control application or clean inlet water admitting is performed by the control unit **5** in cooperation with the level sensors **113** of the nutrient solution in the tank **11**. The user then starts the "start mixing" plan in the control application. The device according to the invention will start to behave in the following manner in individual steps:
- switching off the circulating pump **12;**
- setting the proportional three-way valve **20** to the "MIXING" position in which the watering solution from the tank **11** is fed through the valve **20** to the dosing tube **21;**
- switching on the circulating pump **12;**
- waiting before starting the respective peristaltic pumps **22;**
- dosing the required amount of the respective added substance to the dosing tube **21,** through which the liquid driven by the circulating pump **12** flows;
- mixing the formed solution in the tank **11** by the continued operation of the circulating pump **12** for a set period of time "Duration of mixing [s]";
- switching off the circulating pump **12;**
- waiting for the formed solution to stabilize in the tank **11** for a set period of time "Waiting time before measurement [s]";
- measuring a selected parameter of the formed nutrient solution in the tank **11**, e.g., measurement of electrical conductivity (EC) or another parameter depending on the connected ISE probes;
- comparing the required value of the selected measured parameter of the formed nutrient solution in the tank **11,** e.g., electrical conductivity (EC) of the nutrient solution, in the respective nutrient solution data profile stored in the control unit **5** with the value of this parameter of the formed nutrient solution in the tank **11** measured by the respective ISE probe; if the measured value is within the permitted range -> transition to the below-described step of "pH adjustment"; if the measured value is not within the permitted range -> checking whether the measured value is lower or higher than the required value (if the measured value is lower -> repeating from the preceding step 3 with dynamic change in the dosed amount of the respective added substance; if the measured value is higher -> transition to the next step 11 - admitting clean inlet water);
- setting the proportional three-way valve **20** to the "MIXING" position in which the watering solution from the tank **11** is fed through the valve **20** to the dosing tube **21;**
- switching the valve **102** to the "open" position;
- admitting the required amount of water through the filter **100** and the flowmeter **101;**
- switching the valve **102** to the "closed" position;
- switching on the circulating pump **12;**
- mixing the formed solution in the tank **11** by the continued operation of the circulating pump **12** for a set period of time "Duration of mixing [s]";
- switching off the circulating pump **12;**
- waiting for the formed solution to stabilize in the tank **11** for a set period of time "Waiting time before measurement [s]";
- measuring a selected parameter of the formed nutrient solution in the tank **11**, e.g., measuring electrical conductivity (EC) or another parameter depending on the connected ISE probes;
- comparing the required value of the selected measured parameter of the formed nutrient solution in the tank **11,** e.g., electrical conductivity (EC) of the nutrient solution, in the respective nutrient solution data profile stored in the control unit **5** with the value of this parameter of the formed nutrient solution in the tank **11** measured by the respective ISE probe; if the measured value is within the permitted range -> transition to the below-described step of starting "pH adjustment" ; if the measured value is not within the permitted range -> checking whether the measured value is lower or higher than the required value (if the measured value is lower -> repeating from the preceding step 3 with dynamic change in the dosed amount of the respective added substance; if the measured value is higher -> repeating the step of admitting clean inlet water;
- measuring pH of the formed nutrient solution in the tank **11;**
- comparing the required pH value of the solution in the respective nutrient solution data profile stored in the control unit **5** with the measured value of pH of the formed nutrient solution in the tank **11;** if the measured value is within the permitted range -> rechecking the value of the selected parameter of the formed nutrient solution in the tank **11,** e.g., rechecking electrical conductivity EC or another parameter depending on the connected ISE probes, and if the rechecked value of the respective selected parameter is within the permitted range, the penultimate step of the procedure is performed; if the measured pH value is not within the permitted range -> the next pH adjustment step is performed;
- switching on the circulating pump **12;**
- waiting for a set period of time "Period before dosing pH [s]";
- dosing the necessary calculated (by the control unit **5)** amount of the respective added substance for pH reduction by the respective dosing peristaltic pump **22** according to the program block "pH reduction step [ml]" or according to the program block "pH increase step [ml]";
- mixing the formed solution in the tank **11** by the continued operation of the circulating pump **12** for a set period of time "Duration of mixing [s]";
- switching off the circulating pump **12;**
- waiting for the formed solution to stabilize in the tank **11** for a set period of time "Waiting time before measurement [s]";
- pH measurement;
- a new comparison of the required pH value of the solution in the respective nutrient solution data profile stored in the control unit **5** with the measured pH value of the formed nutrient solution in the tank **11;** if the measured value is within the permitted range -> rechecking the electrical conductivity (EC) of the formed nutrient solution in the tank **11** and if the EC is within the permitted range, the penultimate step of the procedure is performed; if the measured pH value is not within the permitted range -> the pH adjustment step is performed;
- a new measurement of the selected parameter of the formed nutrient solution in the tank **11**, e.g., measurement of electrical conductivity (EC) or another parameter depending on the connected ISE probes;
- comparing the required value of the selected measured parameter of the formed nutrient solution in the tank **11**, e.g., the electrical conductivity (EC) of the nutrient solution, in the respective nutrient solution data profile stored in the control unit **5** with the value of this parameter of the electrical conductivity (EC) of the formed nutrient solution in the tank **11** measured by the respective ISE probe; if the measured value is within the permitted range -> transition to the below-described step of starting the "cultivation" mode; if the measured value is not within the permitted range -> checking whether the measured value is lower or higher than the required value (if the measured value is lower -> repeating from the preceding step 3 with dynamic change in the dosed amount of the added substance; if the measured value is higher -repeating the step of admitting clean inlet water;
- setting the proportional three-way valve **20** to the second outlet **202** to the nutrient solution supply **152** to the plant cultivation system **15** and the control unit **5** controls the circulating pump **12** according to the setting of the "cultivation" mode (e.g., continuous operation, timer operation);
- distribution of the nutrient solution to the plant cultivation system **15** takes place, followed automatically by transition to mode "Continuous".

### Example VI - Continuous mode

The device according to the invention continuously measures the parameters and characteristics of the nutrient solution if the measured value is outside the set range, the control unit **5** performs the following steps:
- switching off the circulating pump **12;**
- setting the proportional three-way valve **20** to the "MIXING" position, in which the watering solution from the tank **11** is fed through the valve **20** to the dosing tube **21;**
- switching on the circulating pump **12;**
- if a higher electrical conductivity (EC) of the formed nutrient solution in the tank **11** has been detected than required: the control unit **5** starts admitting the determined amount of clean inlet water and proceeds to the pH regulation step described below,
- if a lower electrical conductivity (EC) of the formed nutrient solution in the tank **11** than required or a deficiency in another monitored nutrient parameter of the formed nutrient solution in the tank **11** according to the connected probes and according to the definition of conditions and parameters in the growing profile is found, waiting for a set time before actuating the respective dosing peristaltic pump **22** to add a specified amount of substance to increase the EC of the nutrient solution or to adjust said other monitored nutrient parameter of the formed nutrient solution in the tank **11;**
- dosing the required amount of the respective substance to increase the EC of the nutrient solution or to adjust said other monitored nutrient parameter of the formed nutrient solution in the tank **11** by the respective dosing peristaltic pump **22;**
- if the pH of the nutrient solution is higher or lower than required, it is necessary to wait for a specified time "period before dosing pH [s]";
- the required amount of the substance is dosed to adjust the pH of the nutrient solution using the respective peristaltic dosing pump **22;**
- mixing the formed solution in the tank **11** by the continued operation of the circulating pump **12** for a set period of time "Duration of mixing [s]";
- switching off the circulating pump **12;**
- waiting for the formed solution to stabilize in the tank **11** for a set time period "Waiting time before measurement [s]";
- measuring EC and pH
- comparing the required values of EC or of said other monitored nutrient parameter of the formed nutrient solution and the pH of the nutrient solution in the respective nutrient solution data profile stored in the control unit **5** with the measured values (if the measured values are within the permitted range -> the next step of setting the proportional three-way valve **20** and transition to the "cultivation" mode follows; if the measured values are not within the permitted range -> the process is repeated from step 3);
- setting the proportional three-way valve **20** to the second outlet **202** to the nutrient solution supply **152** to the plant cultivation system **15** and the control unit **5** controls the circulating pump **12** according to the setting of the "cultivation" mode (e.g., continuous operation, timer operation);
- the distribution of the nutrient solution to the plant cultivation system **15** and a "continuous cultivation" mode takes place.

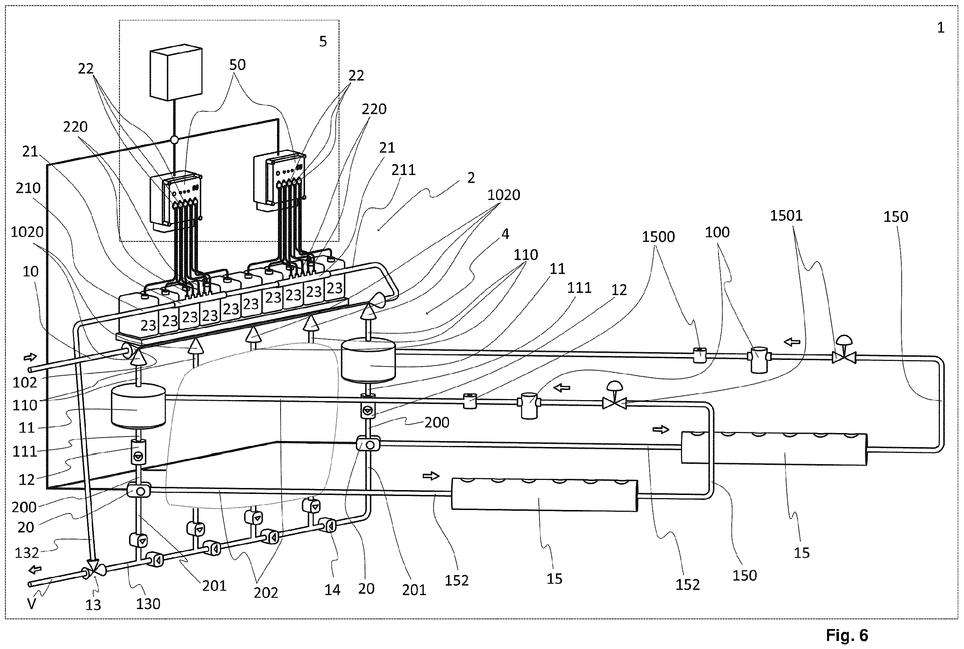

In the exemplary embodiment shown in Fig. 6, arranged in the growing space **1** is a plant cultivation device **4,** which comprises a system of functional nodes, units and elements, including software, which serve to implement plant cultivation. The plant cultivation device **4** comprises at least two plant cultivation systems **15,** a device **2** for the automatic preparation and operational treatment of a watering solution during plant cultivation, a system of unillustrated growing actuators and a control unit **5.** Individual growing actuators are adapted to control the environment in the growing space **1,** such as such as air exchange, temperature, humidity, etc. The growing actuators include action nodes and members for the immediate performance of tasks. The growing actuators are, for example, ventilation, heating, humidifiers, air conditioning, pumps, sensors of temperature, humidity, etc. The individual elements of the plant cultivation device **4** are connected to the control unit **5,** which is adapted to control the individual nodes, groups, elements, etc. of the plant cultivation device **4.** The control unit **5** is further adapted for two-way communication with the user's device of the plant cultivation device **4,** in particular the control unit **5** is adapted for wireless communication and/or cable communication with the user's communication device of the plant cultivation device **4.** In the embodiment of Fig. 6, in the plant cultivation device **4** is arranged an inlet water supply pipeline **10** in which a filter (not shown) and a flow meter (not shown) and a valve **102** for controlling the inflow of the inlet water to the entire cultivation device **4** are connected as required one after the other in series in the direction of the inlet water flow. In the direction of the inlet water flow, downstream of the valve **102,** the supply pipeline **10** is controllably and successively connected to the intake openings **110** of at least two tanks **11** of the nutrient solution, here through auxiliary valves **1020.** If appropriate, the tanks **11** of the nutrient solution are provided with an unillustrated safety overflow of the nutrient solution for protection against overflow of the tank **11** and the tanks **11** are provided with unillustrated level sensors of the nutrient solution in each tank **11,** these level sensors being connected to the control unit **5.** Each tank **11** of the nutrient solution is provided with an outlet pipe **111** of the nutrient solution, which is via the pump **12** of the nutrient solution, preferably a circulating pump, connected to the inlet **200** of the proportional three-way valve **20** of the device **2** for the automatic preparation and operational treatment of a watering solution during plant cultivation. The pump **12** of the nutrient solution is connected to the control unit **5.** In the illustrated exemplary embodiment, the proportional three-way valve **20** is formed by a controlled valve with a servo-actuator, the proportional three-way valve **20** being connected to the control unit **5.** The first outlet **201** of the proportional three-way valve **20** is connected through the clack valve **14** to the inlet **130** of the first three-way valve **13.** The second outlet **202** of the proportional three-way valve **20** is connected to the nutrient solution supply **152** to the plant cultivation system **15.** The plant cultivation system **15** is provided with an unillustrated distribution of the watering solution, which, after leaving the plant cultivation system **15** is further connected to the respective initial nutrient solution tank **11** by the return pipe **150** of the nutrient solution. Preferably, a second clack valve **1500** and a valve **1501** are connected into the return pipe **150** for protection against possible backflow of the nutrient solution and for service disconnection of the plant cultivation system **15**. The valve **1501** is preferably connected to the control unit **5.** In the embodiment shown, at least a filter **100** of solid particles is connected into the return pipe **150,** which, in recirculating cultivation systems, prevents the introduction of mechanical impurities from the plant cultivation system **15** into the tank **11** of the nutrient solution and subsequently into the entire circuit of the nutrient solution into the entire plant cultivation device **4.** The first outlet **131** of the first three-way valve **13** is connected to the discharge opening **V** of the nutrient solution. The second outlet **132** of the first three-way valve **13** is connected to the inlet **210** of the dosing tube **21** of the nutrient solution components, whereby the outlet **211** of the dosing tube **21** is controllably connected to the individual tanks **11** of the nutrient solution. In the dosing tube **21,** the necessary components and additives to the watering solution are added immediately, as described in more detail above. The first three-way valve **13** is connected to the control unit **5.** In the exemplary embodiment shown, a set of two serially arranged dosing tubes **21**. The outlets **220** of the dosing peristaltic pumps **22** are connected into the inner space of each dosing tube **21,** while the inlets of the dosing peristaltic pumps **22** are connected to the reservoirs **23** of added components of the nutrient solution. Ideally, the outlets **220** of the dosing peristaltic pumps **22** are connected to the dosing tube **21** one after the other in series in the direction of the length of the dosing tube **21.** The dosing peristaltic pumps **22** which are connected to the control unit **5,** are in the illustrated exemplary embodiment arranged in the pump part **50** of the control unit **5.** In an unillustrated exemplary embodiment, the reservoirs **23** of added components of the nutrient solution are provided with sensors for the amount of added components of the nutrient solution in each reservoir **23,** e.g., are provided with level sensors of added components of the nutrient solution in the reservoir **23,** which is advantageous for improving the functionality of the system, for protection against the unexpected consumption of all the contents of the reservoir **23,** etc. The sensors of the amount of added components of the nutrient solution in each reservoir **23** are connected to the control unit **5.** In the exemplary embodiment shown, the device **2** for the automatic preparation and operational treatment of a watering solution during plant cultivation is provided with a pair of serially arranged dosing tubes **21,** wherein the outlets **220** of the five dosing peristaltic pumps **22**, each of which is connected to one reservoir **23** of added nutrient solution components **23,** are successively connected into each of the five dosing peristaltic pumps **22** in the direction of the length of the dosing tube **21**, i.e., up to ten components are added to the nutrient solution in a targeted and controlled manner, whereby the number and volume of the actually added components is determined by the control unit **5** and dosing is performed within the corresponding operating time of the relevant calibrated peristaltic pump **22.** At the same time, the dosed volume is software subtracted from the remaining amount of the respective added component in the respective reservoir **23** and so there is no need to use a measuring device of the filling level of the reservoirs **23**. In an unillustrated exemplary embodiment, the outlets **220** of all the dosing peristaltic pumps **22** are connected into one dosing tube **21,** or the outlets **220** of all the necessary dosing peristaltic pumps **22** are connected into a different suitable number of the dosing tubes **21**. In another unillustrated exemplary embodiment, the number of the outlets **220** of the dosing peristaltic pumps **22** connected into each dosing tube is different, for example, 2, 3, 4, 6, etc., which makes this system of adding ingredients of the nutrient solution a modular system capable of easily adapting to virtually any number of substances added to the nutrient solution. The tanks **11** of the nutrient solution are provided with a system of unillustrated sensors of the characteristics or parameters of the nutrient solution in each tank **11.** The sensors of the nutrient solution characteristics are connected to the control unit **5.** The control unit **5** is either common to all nodes, units, elements, etc., of the plant cultivation device, or it is suitably divided into individual sub-units, which, if appropriate, are arranged in the individual parts **50** to **53** of the housing of the control unit **5.**

The plant cultivation device **4** with the plant cultivation system **15,** the device **2** for the automatic preparation and operational treatment of a watering solution during plant cultivation, the control unit **5** and the growing actuators **3** according to Fig. 6 works adequately as in the exemplary embodiments of Figs. 1 to 5, including the examples of the activities of the control unit **5** according to the control software, i.e., examples of program steps (blocks), the only difference being that the inlet water is fed through the supply pipeline **10** in a controlled manner into the individual tanks **11** of the nutrient solution, wherein an individual nutrient solution different from the nutrient solution in the other tanks **11** can be prepared in each tank **11** and each respective plant cultivation system **15** or a system of plant cultivation systems **15** connected to one tank **11** may be supplied with a different nutrient solution, e.g., in a situation where the plant cultivation systems **15** with different plants or with the same plants but at different development stages, etc., are supplied from different tanks **11.**

### Industrial applicability

The presently disclosed mixing device for maintaining fertigation parameters can be used especially for production greenhouses/foil greenhouses and indoor growing areas, in research and educational activities in horticulture and agriculture, but it can also be used in other fields, such as operational maintenance of swimming pools, applications for smart homes, monitoring and adjustment of industrial processes, aquariums, terrariums, etc.

### List of references

- 1: growing space
- 10: inlet water supply pipeline
- 101: flow meter
- 102: valve
- 11: tank of nutrient solution
- 110: intake opening of the tank of nutrient solution
- 11: outlet pipe of the nutrient solution
- 112: safety overflow of the nutrient solution
- 113: level sensor of the nutrient solution in the tank
- 12: pump
- 13: first three-way valve
- 130: inlet of the first three-way valve
- 131: first outlet of the first three-way valve
- 132: second outlet of the first three-way valve
- 14: first clack valve
- 15: plant cultivation system
- 150: return pipe of the nutrient solution
- 151: cultivated plant
- 1500: second clack valve
- 1501: valve
- 152: nutrient solution supply to the plant cultivation system
- 16: pumping tank
- 160: pumping pump
- 161: float switch
- 162: safety overflow of the nutrient solution
- 2: device for the automatic preparation and operational treatment of a watering solution during plant cultivation
- 20: the proportional three-way valve
- 200: inlet of the proportional three-way valve
- 201: first outlet of the proportional three-way valve
- 202: second outlet of the proportional three-way valve
- 21: dosing tube
- 210: inlet of the dosing tube
- 211: outlet of the dosing tube
- 212: connecting pipe
- 22: dosing peristaltic pump
- 220: outlet of the dosing peristaltic pump
- 23: reservoir of added components of the nutrient solution
- 24: sensor of the nutrient solution characteristics
- 3: growing actuators
- 4: plant cultivation device
- 5: control unit
- 50: pump part of the control unit
- 51: individual part of the control unit housing
- 52: individual part of the control unit housing
- 53: individual part of the control unit housing
- 6: sensor unit of the characteristics of the internal environment of the growing space
- 7: sensor unit of the characteristics of the external environment of the growing space
- 8: communication device
- 82: communication interface
- V: discharge opening of the nutrient solution

## Claims

1. A system for the preparation and operational treatment of a watering solution, which comprises an inlet water supply pipeline (10) which opens into a tank (11) of a nutrient solution, which is further provided with an outlet pipe (111) of nutrient solution from the tank (11) adapted to be connected to a nutrient solution supply (152) to a plant cultivation system (15), wherein the outlet pipe (111) of the nutrient solution from the tank (11) is connected to an inlet (200) of a proportional three-way valve (20), whose first outlet (201) is connected to an inlet (210) of at least one dosing tube (21) of nutrient solution components and whose second outlet (202) is adapted to be connected to the nutrient solution supply (152) to the plant cultivation system (15), the proportional three-way valve (20) being connected to a control unit (5), wherein an outlet (211) of the dosing tube (21) is connected to the tank (11) of the nutrient solution and an outlet (220) of at least one dosing peristaltic pump (22) is connected into the dosing tube (21), an inlet of the dosing peristaltic pump (22) being connected to a reservoir (23) of added components of the nutrient solution, wherein the dosing peristaltic pump (22) is connected to the control unit (5), to which are further connected at least one sensor (24) of the nutrient solution characteristics in the tank (11) and at least one level sensor (113) of the nutrient solution in the tank (11), these sensors (24, 113) being connected to the control unit (5).

2. The system according to claim 1, **characterized in that** a pump (12) of the nutrient solution is connected into the outlet pipe (111) of the nutrient solution from the tank (11).

3. The system according to 1 or 2, **characterized in that** a three-way valve (13) is connected through its inlet (130) in the outlet pipe (111) of the nutrient solution from the tank (11), whereby the first outlet (131) of the three-way valve (13) is connected through a first clack valve (14) to a discharge opening of the nutrient solution and its second outlet (132) is connected to the inlet (200) of the proportional three-way valve (20), the three-way valve (13) being connected to the control unit (5).

4. The system according to claim 1 or 2, **characterized in that** the outlet (211) of the dosing tube (21) is controllably connected to at least two tanks (11) of the nutrient solution and each tank (11) is by its outlet pipe (111) of the nutrient solution connected to the inlet (200) of one proportional three-way valve (20), whereby the first outlet (201) of each proportional three-way valve (20) is connected to the inlet (210) of at least one dosing tube (21) of nutrient solution components and the second outlet (202) of each proportional three-way valve (20) is adapted to be connected to the nutrient solution supply (152) to the plant cultivation system (15) and the inlet water supply pipeline (10) is controllably connected to the intake openings (110) of all the tanks (11) of the nutrient solution.

5. The system according to any of claims 1 to 4, **characterized in that** the outlets (220) of the dosing peristaltic pumps (22) are connected into the dosing tube (21) one after the other in series in the direction of the length of the dosing tube (21).

6. The system according to any of claims 1 to 5, **characterized in that** the tank (11) is adapted to be connected to a return pipe (150) of the nutrient solution from the plant cultivation system (15).

7. The system according to any of claims 1 to 6, **characterized in that** the control unit (5) is adapted to be connected to a sensor unit (6) of the characteristics of the internal environment of the growing space (1) and a sensor unit (7) of the characteristics of the external environment of the growing space (1) and, if necessary, also to other nodes, groups and elements in the growing space (1).

8. The system according to any of claims 1 to 7, **characterized in that** the control unit (5) is further provided with software with a user interface, in which defined and editable growing profiles with statistical output for the user interface are cascaded, and is further provided with by memory means and means for storing data on the operation of the plant cultivation device (4) and on the conditions in the plant cultivation system (1) in real time.

9. The system according to any of claims 1 to 8, **characterized in that** the control unit (5) is provided with an interface for connecting a communication device of the user of the plant cultivation device, especially for the data connection through a web application.

10. Method of automatic preparation and operational treatment of a watering solution in plant cultivation making use of a system according to any one of the preceding claims, in which inlet water is mixed with a specified amount of individual added substances, **characterized in that** characteristics and parameters of the nutrient solution in the tank (11) are monitored and compared by the control unit (5) with the required characteristics and parameters and, in order to adjust the characteristics and parameters of the nutrient solution in the tank (11), the nutrient solution is transported from the tank (11) by the pump (12) to the dosing tube (21), in which a specified amount of the necessary component of the nutrient solution determined by the control unit (5) is added to the nutrient solution, whereupon the nutrient solution from the dosing tube (21) together with the added necessary components is fed back to the tank (11) of the nutrient solution and new characteristics and parameters of the nutrient solution in the tank (11) are checked, whereupon, if the required characteristics and parameters of the nutrient solution in the tank (11) are reached, a decision is made to start feeding the nutrient solution into the plant cultivation system, wherein if the required characteristics and parameters of the nutrient solution in the tank (11) are not reached, a decision is made to repeat the addition of the necessary components of the nutrient solution by repeating the passage of the nutrient solution through the dosing tube (21), optionally also in combination with admitting clean inlet water through the supply pipeline (10).

11. A plant cultivation device for hydroponic, aquaponic and conventional plant cultivation on soil, **characterized in that** it comprises at least one system for the preparation and operational treatment of a watering solution according to any of claims 1 to 9.

## Patentansprüche

1. System zur Vorbereitung und betrieblichen Aufbereitung einer Begießung, das ein Zulaufrohr (10) des Eingangswassers aufweist, das in einen Behälter (11) einer Nährlösung mündet, der weiter eine Ausgangsrohrleitung (111) der Nährlösung aus dem Behälter (11) aufweist, die zum Anschluss an eine Zufuhr (152) der Nährlösung in ein Anzuchtsystem (15) angepasst ist, **wobei** die Ausgangsrohrleitung (111) der Nährlösung aus dem Behälter (11) an einen Eingang (200) eines Proportionaldreiwegventils (20) angeschlossen ist, dessen erster Ausgang (201) an einen Eingang (210) von mindestens einem Dosierrohr (21) der Nährlösungsbestandteile angeschlossen ist und der andere Ausgang (202) des Proportionaldreiwegventils (20) zum Anschluss an die Zufuhr (152) der Nährlösung ins Anzuchtsystem (15) angepasst ist und das Proportionaldreiwegventil (20) an eine Steuereinheit (5) angeschlossen ist, wobei der Ausgang (211) des Dosierrohres (21) an den Behälter (11) der Nährlösung angeschlossen ist und ins Dosierrohr (21) der Ausgang (220) von mindestens einer peristaltischen Dosierpumpe (22) eingemündet ist, deren Eingang an einen Vorratsbehälter (23) des zugesetzten Nährlösungsbestandteiles angeschlossen ist, wobei die peristaltische Dosierpumpe (22) an die Steuereinheit (5) angeschlossen ist, an die weiter mindestens ein Sensor (24) der Nährlösungseigenschaften im Behälter (11) und mindestens ein Sensor (113) der Höhe des Nährlösungsspiegels im Behälter (11) angeschlossen sind und diese Sensoren (24, 113) an die Steuereinheit (5) angeschlossen sind.

2. System nach dem Anspruch 1, **dadurch gekennzeichnet, dass** in der Ausgangsrohrleitung (111) der Nährlösung aus dem Behälter (11) eine Pumpe (12) der Nährlösung eingeschaltet ist.

3. System nach dem Anspruch 1 oder 2, **dadurch gekennzeichnet, dass** in der Ausgangsrohrleitung (111) der Nährlösung aus dem Behälter (11) mit seinem Eingang (130) ein Dreiwegventil (13) eingeschaltet ist, dessen erster Ausgang (131) über die erste Rückschlagklappe (14) an einen Auslass der Nährlösung angeschlossen ist und dessen zweiter Ausgang (132) an den Eingang (200) des Proportionaldreiwegventils (20) angeschlossen ist, wobei das Dreiwegventil (13) an die Steuereinheit (5) angeschlossen ist.

4. System nach dem Anspruch 1 oder 2, **dadurch gekennzeichnet, dass** der Ausgang (211) des Dosierrohres (21) an mindestens zwei Behälter (11) der Nährlösung steuerbar angeschlossen ist und jeder Behälter (11) mit seiner Ausgangsrohrleitung (111) der Nährlösung an den Eingang (200) eines Proportionaldreiwegventils (20) angeschlossen ist, wobei der erste Ausgang (201) von jedem Proportionaldreiwegventil (20) an den Eingang (210) von mindestens einem Dosierrohr (21) der Nährlösungsbestandteile angeschlossen ist und der andere Ausgang (202) von jedem Proportionaldreiwegventil (20) zum Anschluss an die Zufuhr (152) der Nährlösung ins Anzuchtsystem (15) angepasst ist und das Zulaufrohr (10) des Eingangswassers an die Einlässe (110) von allen Behältern (11) der Nährlösung steuerbar angeschlossen ist.

5. System nach einem der Ansprüche 1 bis 4, **dadurch gekennzeichnet, dass** die Ausgänge (220) der peristaltischen Dosierpumpen (22) an das Dosierrohr (21) in einer Serie nacheinander in der Richtung der Länge des Dosierrohres (21) angeschlossen sind.

6. System nach einem der Ansprüche 1 bis 5, **dadurch gekennzeichnet, dass** der Behälter (11) zum Anschluss an eine Rücklaufrohrleitung (150) der Nährlösung aus dem Anzuchtsystem (15) angepasst ist.

7. System nach einem der Ansprüche 1 bis 6, **dadurch gekennzeichnet, dass** die Steuereinheit (5) zum Anschluss an eine Sensoreinheit (6) der Eigenschaften der inneren Umgebung im Anzuchtraum (1) und eine Sensoreinheit (7) der Eigenschaften der Außenumgebung des Anzuchtraumes (1) und eventuell auch an weitere Knoten, Gruppen und Elemente im Anzuchtraum (1) angepasst ist.

8. System nach einem der Ansprüche 1 bis 7, **dadurch gekennzeichnet, dass** die Steuereinheit (5) eine Software mit einer Benutzerschnittstelle aufweist, in der definierte und editierbare Anzuchtprofile mit statistischem Ausgang für die Benutzerschnittstelle durch Speichermittel kaskadenförmig geordnet werden, und weiterhin die Mittel zum Speichern von Daten über den Betrieb der Anzuchteinrichtung (4) und über die Bedingungen im Anzuchtsystem (1) in Echtzeit aufweist.

9. System nach einem der Ansprüche 1 bis 8, **dadurch gekennzeichnet, dass** die Steuereinheit (5) eine Schnittstelle zum Anschluss einer Kommunikationseinrichtung des Benutzers der Anzuchteinrichtung, insbesondere zur Datenanbindung über eine Webanwendung, aufweist.

10. Verfahren zur automatischen Vorbereitung und betrieblichen Aufbereitung einer Begießung beim Pflanzenanbau unter Verwendung eines Systems nach einem der vorangehenden Ansprüche, bei dem das Eingangswasser mit einer festgelegten Menge einzelner zugesetzter Stoffe vermischt wird, **dadurch gekennzeichnet, dass** Eigenschaften und Parameter der Nährlösung im Behälter (11) aufgenommen werden und durch die Steuereinheit (5) mit den geforderten Eigenschaften und Parametern verglichen werden und zur Aufbereitung der Eigenschaften und Parameter der Nährlösung im Behälter (11) die Nährlösung aus dem Behälter (11) durch eine Pumpe (12) zum Dosierrohr (21) befördert wird, in dem der Nährlösung die vorgegebene Menge des notwendigen Nährlösungsbestandteils zugesetzt wird, die von der Steuereinheit (5) festgesetzt wird, woraufhin die Nährlösung aus dem Dosierrohr (21) zusammen mit den zugesetzten notwendigen Bestandteilen in den Behälter (11) der Nährlösung zurückgeführt wird und die neuen Eigenschaften und Parameter der Nährlösung im Behälter (11) überprüft werden, woraufhin im Falle der Erreichung der geforderten Eigenschaften und Parameter der Nährlösung im Behälter (11) über die Einleitung der Zuführung der Nährlösung in ein Anzuchtsystem entschieden wird, wobei beim Nichterreichen der geforderten Eigenschaften und Parameter der Nährlösung im Behälter (11) über eine Wiederholung der Zugabe der erforderlichen Nährlösungsbestandteile beim Wiederholen des Durchgangs der Nährlösung durch das Dosierrohr (21), gegebenenfalls auch in der Kombination mit der Zufuhr von sauberem Eingangswasser durch das Zulaufrohr (10) entschieden wird.

11. Anzuchteinrichtung für den hydroponischen, aquaponischen und konventionellen Anbau von Pflanzen im Boden, **dadurch gekennzeichnet, dass** sie mindestens ein System zur Vorbereitung und betrieblichen Aufbereitung der Begießung nach einem der Ansprüche 1 bis 9 aufweist.

## Revendications

1. Système de préparation et de réglage opérationnel d'un système d'arrosage qui comprend une conduite d'arrivée (10) d'eau d'entrée qui débouche dans un réservoir de solution nutritive (11), le réservoir est en outre pourvu d'une conduite de sortie (111) de solution nutritive du réservoir (11), adaptée pour être connectée à l'arrivée (152) de solution nutritive vers le système de culture (15), **tandis que** la conduite de sortie (111) de solution nutritive du réservoir (11) est connectée à l'entrée (200) d'une vanne proportionnelle à trois voies (20) dont la première sortie (201) est reliée à l'entrée (210) d'au moins un tuyau de dosage (21) des composants de la solution nutritive, et la deuxième sortie (202) de la vanne proportionnelle à trois voies (20) est adaptée pour être reliée à l'arrivée (152) de la solution nutritive dans le système de culture (15), et la vanne proportionnelle à trois voies (20) est reliée à l'unité de commande (5), tandis que la sortie (211) du tuyau de dosage (21) est reliée au réservoir (11) de solution nutritive et la sortie (220) d'au moins une pompe péristaltique de dosage (22), dont l'entrée est reliée au réservoir (23) du composant de solution nutritive à ajouter, est disposée dans le tuyau de dosage (21), dans lequel la pompe péristaltique de dosage (22) est connectée à une unité de commande (5), à laquelle sont également connectés au moins un capteur (24) pour les propriétés de la solution nutritive dans le réservoir (11) et au moins un capteur (113) pour le niveau de la solution nutritive dans le réservoir (11), et ces capteurs (24, 113) sont connectés à l'unité de commande (5).

2. Système selon la revendication 1, **caractérisé en ce qu'**une pompe (12) de solution nutritive est connectée à la conduite de sortie (111) de la solution nutritive du réservoir (11).

3. Système selon la revendication 1 ou 2, **caractérisé en ce qu'**une vanne à trois voies (13) est connectée par son entrée (130) dans la conduite de sortie (111) de la solution nutritive du réservoir (11) ; la première sortie (131) de la vanne est connectée à l'aide du premier clapet anti-retour (14) à la sortie de la solution nutritive, et la deuxième sortie (132) est connectée à l'entrée (200) de la vanne proportionnelle à trois voies (20), tandis que la vanne à trois voies (13) est connectée à l'unité de commande (5).

4. Système selon la revendication 1 ou 2, **caractérisé en ce que** la sortie du tuyau de dosage (21) est reliée de manière opérationnelle à au moins deux réservoirs (11) de solution nutritive, et chaque réservoir (11) est relié par sa conduite de sortie (111) de solution nutritive à l'entrée (200) d'une vanne proportionnelle à trois voies (20), la première sortie (201) de chaque vanne proportionnelle à trois voies (20) est reliée à l'entrée (210) d'au moins un tuyau de dosage (21) des composants de la solution nutritive, et la deuxième sortie (202) de chaque vanne proportionnelle à trois voies (20) est adaptée pour être reliée à l'arrivée (152) de solution nutritive dans le système de culture (15) et la conduite d'arrivée (10) d'eau d'entrée est reliée de manière opérationnelle aux entrées (110) de chaque réservoir (11) de solution nutritive.

5. Système selon l'une des revendications de 1 à 4, **caractérisé en ce que** les sorties (220) des pompes péristaltiques de dosage (22) sont reliées au tuyau de dosage (21) en série dans le sens de la longueur du tuyau de dosage (21).

6. Système selon l'une des revendications de 1 à 5, **caractérisé en ce que** le réservoir (11) est adapté pour être connecté à la conduite de retour (150) de la solution nutritive du système de culture (15).

7. Système selon l'une des revendications de 1 à 6, **caractérisé en ce que** l'unité de commande (5) est adaptée pour être connectée à une unité de capteur (6) des propriétés de l'environnement interne de l'espace de culture (1) et à une unité de capteur (7) des propriétés de l'environnement externe de l'espace de culture (1) et, le cas échéant, à d'autres noeuds, groupes et éléments dans l'espace de culture (1).

8. Système selon l'une des revendications de 1 à 7, **caractérisé en ce que** l'unité de commande (5) est pourvue d'un logiciel d'interface utilisateur dans lequel des profils de culture sont définis et modifiables en cascade avec une sortie statistique pour l'interface utilisateur par des moyens de stockage, et est aussi pourvue de moyens de stockage de données sur le fonctionnement du dispositif de culture (4) et sur les conditions dans le système de culture (1) en temps réel.

9. Système selon l'une des revendications de 1 à 8, **caractérisé en ce que** l'unité de commande (5) est pourvue d'une interface qui permet de connecter un dispositif de communication de l'utilisateur du dispositif de cultivation, en particulier pour une connexion de données à l'aide d'une application web.

10. Procédé de préparation automatique et de réglage opérationnel d'un système d'arrosage pour la culture de plantes qui utilise le système selon l'une des revendications précédentes, dans lequel l'eau d'entrée est mélangée avec une quantité spécifiée de chaque additif, **caractérisé en ce que** les propriétés et paramètres de la solution nutritive dans le réservoir (11) sont détectés et comparés aux propriétés et paramètres exigés par l'unité de contrôle (5), et pour ajuster les propriétés et paramètres de la solution nutritive dans le réservoir (11), la solution nutritive est transportée du réservoir (11) par une pompe (12) vers un tuyau de dosage (21) dans lequel une quantité spécifiée du composant de solution nutritive requis, déterminée par l'unité de contrôle (5), est ajoutée à la solution nutritive, la solution nutritive provenant du tuyau de dosage (21), avec les composants nécessaires ajoutés, est renvoyée dans le réservoir (11) de solution nutritive ; et les nouvelles propriétés et les nouveaux paramètres de la solution nutritive dans le réservoir (11) sont vérifiés, après quoi, si les propriétés et les paramètres souhaités de la solution nutritive dans le réservoir (11) sont atteints, il est décidé de commencer à alimenter le système de culture avec la solution nutritive, et si les propriétés et paramètres souhaités de la solution nutritive dans le réservoir (11) ne sont pas atteints, il est décidé de répéter l'ajout des composants nécessaires de la solution nutritive tout en répétant le passage de la solution nutritive à travers le tuyau de dosage (21), éventuellement en combinaison avec l'admission d'eau d'entrée propre à travers la conduite d'arrivée (10).

11. Appareil de cultivation pour culture de plantes en hydroponie, aquaponie et conventionnelle, **caractérisé en ce qu'**il comprend au moins un système pour la préparation et le réglage opérationnel de l'arrosage selon l'une des revendications de 1 à 9.
